# EUROPÄISCHE PATENTSCHRIFT

(11) **EP 0 479 111 B1**
(45) Veröffentlichungstag und Bekanntmachung des Hinweises auf die Patenterteilung: **08.03.1995**
(21) Anmeldenummer: 91116360.8
(22) Anmeldetag: 25.09.1991
(51) Int. Cl.: A47J 31/00, A47J 31/10, A47J 31/40

(54) **Behälter zum Zubereiten heisser Getränke**
Container for making hot drinks
Récipients pour préparer des boissons chaudes

(30) Priorität: 04.10.1990 DE 9013838 U
(43) Veröffentlichungstag der Anmeldung: 08.04.1992
(73) Patentinhaber: Timm, Eberhard, 21279 Appel (DE)
(72) Erfinder: Timm, Eberhard, 21279 Appel (DE)
(74) Vertreter: Glawe, Delfs, Moll & Partner

(56) Entgegenhaltungen:
- EP-A- 0 382 001
- DE-A- 1 404 799
- DE-A- 2 212 283
- FR-A- 2 579 880
- US-A- 3 804 134

## Beschreibung

Die Erfindung betrifft einen in ein Stromversorgungsteil einsetzbaren Behälter zum Zubereiten heißer Getränke mit einem Flüssigkeitsvorratsbehälter, einem darin angeordneten elektrischen Heizelement und einem Sammelbehälter für das zubereitete Getränk, wobei der Flüssigkeitsvorratsbehälter einen Verschluß aufweist, der im Boden des Flüssigkeitsvorratsbehälters angeordnet ist und sich bei einem vorgegebenen Behälterinnendruck aufgrund Auswölbens des Bodens nach außen nicht selbsttätig umkehrbar öffnet, der mit Kontakten für die Zuleitung von elektrischem Strom versehen ist, die über eine elektrische Leitung mit dem Heizelement verbunden sind, und der in den Sammelbehälter so einsetzbar oder eingesetzt ist, daß sich in der Betriebsstellung der Sammelraum im wesentlichen unterhalb des Vorratsbehälters befindet, und wobei die Stromzufuhr zum Heizelement so ausgebildet ist, daß sie beim Öffnen des Verschlusses unterbrochen wird.

Es ist bekannt, bei Kaffeemaschinen als Auslaßventil ein Bimetallventil vorzusehen, das sich bei einer vorgegebenen Wassertemperatur öffnet, so daß der Kaffee aufgebrüht werden kann (DE-A-2 212 283). Ein solches Bimetallventil ist technisch aufwendig. Soll die Kaffeemaschine erneut verwendet werden, also kaltes Wasser nachgefüllt werden, so kann dies nicht durch das dann geschlossene Bimetallventil erfolgen. Es ist vielmehr eine zusätzliche Öffnung des Wasservorratsbehälters notwendig, durch die auch Bakterien in den Wasservorrat eindringen können, so daß der Wasservorrat nicht längere Zeit frisch bleibt. Er kann auch durch diese zusätzliche Öffnung herausschwappen, wenn die Kaffeemaschine z.B. in einem Fahrzeug angeordnet ist. Schließlich wird auch, wenn sich das Bimetallventil öffnet, die Stromzufuhr nicht unterbrochen, so daß hier weitere aufwendige Sicherheitsmaßnahmen vorgesehen werden müssen (z.B. ein weiterer Bimetallstreifen), damit die Heizung bei leerem Vorratsbehälter abgeschaltet wird.

Es ist weiter bekannt, mit einer Folie versiegelte Wasservorratsbehälter vorzusehen, die dann in das Gerät zum Erzeugen von warmen und kalten Flüssigkeiten eingesetzt werden, wobei die Folie zerstört wird (FR-A-2 579 880). Der Nachteil dieses Gerätes besteht darin, daß die Wasservorratsbehälter nicht vom Benutzer nachgefüllt werden können und er auf längeren Reisen eine entsprechend große Anzahl solcher Vorratsbehälter mit sich führen muß. Auch bei diesem Gerät sind aufwendige Sicherungsmaßnahmen notwendig, damit nach Erschöpfen des Wasservorrats die Stromzufuhr zur Heizung abgestellt wird.

Schließlich ist es bekannt, Aufgußmischungen für Kaffee luft- und aromadicht in einer Folie einzuschließen, die dann beim Aufbrühen des Getränks perforiert wird (DE-A-1 404 799). Irgendwelche Hinweise, wie solche Einheiten im Zusammenhang mit einem Gerät zum Zubereiten heißer Getränke verwendet werden können, bei dem der Flüssigkeitsvorratsraum abgedichtet ist und bei dem sich die Stromzufuhr zur Heizung nach Erschöpfen des Wasservorrats ausschaltet, sind der Entgegenhaltung nicht zu entnehmen.

Bekannte Behälter der eingangs genannten Art (EP-A-0 382 001) können in einen Stromversorgungsteil eingeführt werden. Es wird dann eine Flüssigkeit, normalerweise Wasser, in dem Behälter erwärmt. Durch die Erwärmung steigt der Behälterinnendruck an, so daß sich der Boden des Flüssigkeitsvorratsbehälters nach außen wölbt und ein sich im Boden angeordneter Verschluß öffnet, so daß die heiße Flüssigkeit mit dem Brühmittel oder aufzubrühenden Material in Berührung kommt. Das so aufbereitete heiße Getränk sammelt sich dann im Sammelbehälter unterhalb des Flüssigkeitsvorratsbehälters und kann durch eine seitliche Öffnung getrunken werden oder (im Falle einer Suppe) mit einem Löffel gegessen werden, nachdem der Behälter aus dem Stromversorgungsteil entnommen und der Flüssigkeitsvorratsbehälter vom Sammelbehälter getrennt ist.

Bei der vorbekannten Ausführungsform weist der Verschluß einen feststehenden Dorn auf, der von einer mit einer Dichtung versehenen Öffnung des Bodens umschlossen wird. Eine solche Dichtung vermag aber insbesondere bei längerer Lagerung nicht zufriedenstellend zu arbeiten.

Die Aufgabe der Erfindung besteht daher in der Schaffung eines Behälters, der im Bereich des Verschlusses besser abgedichtet ist.

Die erfindungsgemäße Lösung besteht darin, daß der Verschluß von einem eine Öffnung des Bodens umgebenden rohrförmigen Vorsprung und einem im Inneren des Flüssigkeitsvorratsbehälters befestigten Dorn gebildet ist, und daß am Vorsprung und/oder Dorn, zwischen denselben, Dichtungen angeordnet sind.

Man hat also nicht mehr eine mehr oder weniger linienförmige Dichtfläche zwischen Boden und Dorn, sondern einen größeren Bereich zwischen rohrförmigem Vorsprung und Dorn, zwischen denen geeignete Dichtungen, insbesondere Lippendichtungen oder Rollringdichtungen angeordnet sind.

Ein weiterer Vorteil, daß der Dorn im Flüssigkeitsvorratsbehälter und nicht wie bei der vorbekannten Ausführungsform außerhalb desselben angeordnet ist, besteht darin, daß das aufzubrühende Material nicht mehr ringförmig um den Dorn angeordnet werden muß, sondern Zylinderform ähnlich einer Tablette haben kann. Ein weiterer Vorteil ist die geringere Zahl von Einzelteilen beim Zusammensetzen des Behälters, was es ermöglicht, daß diese Behälter wiederverwendbar ausgebildet werden können und dabei vom Verbraucher nach entsprechender Reinigung selbst wieder für zukünftige Verwendung befüllt werden können.

Vorteilhafterweise ist unten auf dem Flüssigkeitsvorratsbehälter ein becherförmiges Element mit dem aufzubrühenden Material aufgesetzt, das lösbar aufgesetzt sein sollte, wenn der Behälter vom Verbraucher selbst befüllt werden soll. Unten am ringförmigen Vorsprung kann ein Trichter angeordnet sein, der sich nach unten erweitert, so daß der Flüssigkeitsvorratsbehälter einfacher mit Flüssigkeit gefüllt werden kann, nachdem er auf den Kopf gestellt worden ist. "unten" bedeutet dabei immer die Seite, die sich in der Gebrauchsstellung unten befindet.

Der Trichter kann zusammenfaltbar sein, wie man es z.B. von Gegenlichtblenden von Fotoapparaten kennt, so daß er weniger Platz einnimmt, nachdem er seine Aufgabe erfüllt hat, daß der Flüssigkeitsvorratsbehälter leichter mit Flüssigkeit gefüllt werden kann.

Die Erfindung wird im folgenden anhand von vorteilhaften Ausführungsformen unter Bezugnahme auf die beigefügten Zeichnungen beschrieben. Es zeigen:
- Fig. 1 bis 3: eine erste Ausführungsform des Behälters in verschiedenen Arbeitsstellungen bei der Herstellung des heißen Getränkes;
- Fig. 4 bis 6: den Behälter der Figuren 1 bis 3 bei verschiedenen Arbeitsstellungen bei der Befüllung oder Wiederbefüllung;
- Fig. 7: im Querschnitt den oberen Teil des Behälters in ähnlicher Ausführungsform wie bei den Fig. 1 bis 3, der in einer Halterung eingeschoben ist; und
- Fig. 8: in vergrößerter Darstellung den Ventilbereich eines Behälters in einer ähnlichen Ausführungsform wie derjenigen der Fig. 1 bis 3.

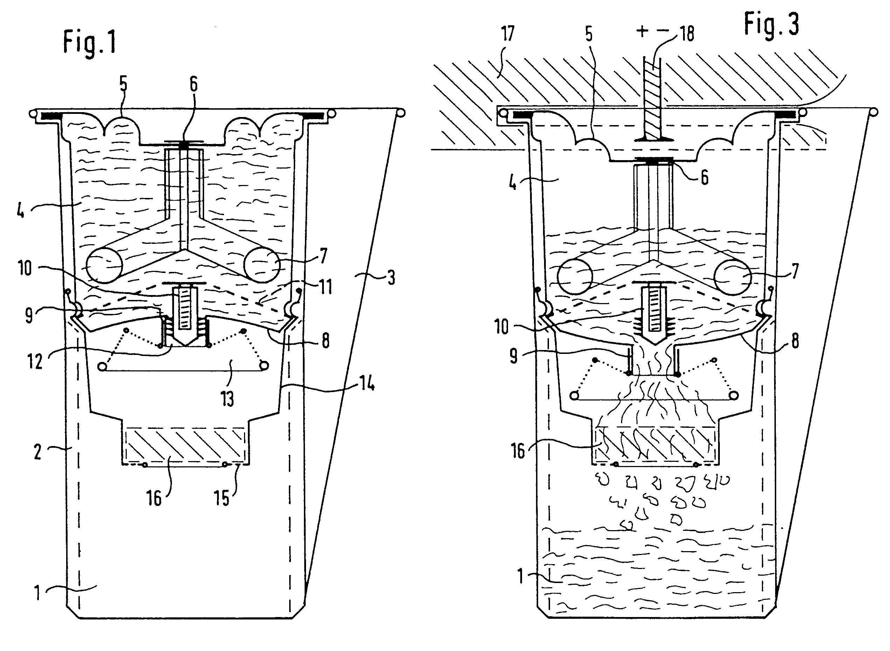

Der Behälter der Ausführungsform der Fig. 1 bis 6 besteht aus einem im wesentlichen zylinderförmigen oder konusförmigen Sammelbehälter 1, der im unteren Teil mit einer isolierenden Wandverstärkung 2 und an einer Seite mit einer Erweiterung 3 versehen ist, durch die das Getränk konsumiert werden kann.

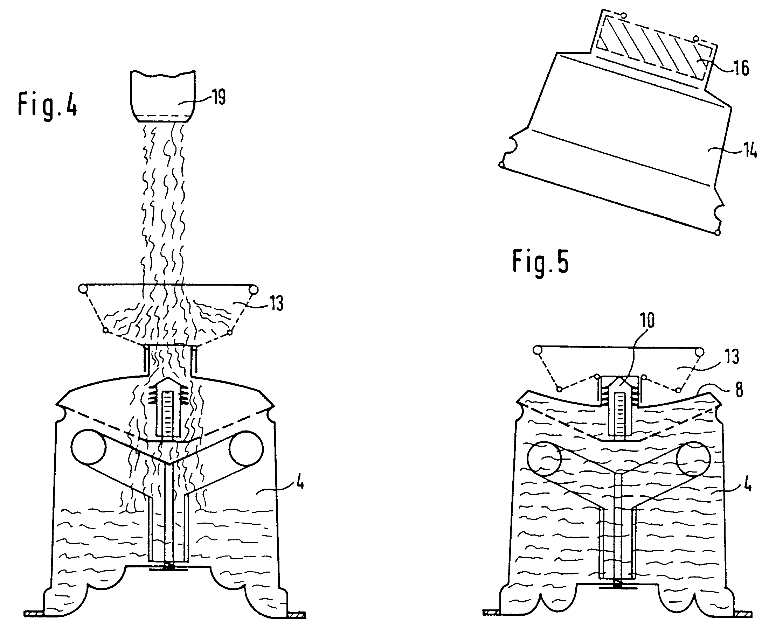

In den Sammelbehälter 1 ist ein Flüssigkeitsvorratsbehälter 4 eingesetzt, der einen balgartigen Deckel 5 aufweist, der so vorgespannt ist, daß er von der Stellung der Fig. 1 in die Stellung der Fig. 3 sich zu bewegen bestrebt ist, solange er nicht durch den Flüssigkeitsinnendruck im Behälter 4 daran gehindert wird. Am Vorratsbehälter 4 sind elektrische Kontakte 6 vorgesehen, die mit Heizelementen 7 elektrisch verbunden sind, die eine Blankdrahtheizwendel oder ein isolierter ummantelter Heizwiderstand sein können.

Der Boden 8 des Vorratsbehälters 4 ist gewölbt und hat zwei stabile Stellungen, nämlich die in den Fig. 1, 2, 5 und 6 gezeigte nach innen gewölbte Stellung und die in den Fig. 3 und 4 gezeigte nach außen gewölbte Stellung. Der Boden 8 weist in der Mitte ein Loch auf, das von einem rohrförmigen Vorsprung 9 umgeben ist. In diesen Vorsprung 9 ragt ein Dorn 10 hinein, der mit einer gelochten Platte 11 im Inneren des Vorratsbehälters 4 befestigt ist. Am Dorn 10 sind Lippendichtungen 12 angeordnet. Weiter ist am Vorsprung 9 noch ein zusammenklappbarer Trichter 13 angeordnet, dessen Wirkungsweise weiter unten beschrieben werden wird.

Auf den Vorrratsbehälter 4 ist ein becherförmiges Element 14 aufgestülpt, das dort von einer Schnapp-Rast-Verbindung festgehalten wird. Der Becher 14 weist unten eine Öffnung auf, die von einem Sieb 15 teilweise verschlossen ist. Oberhalb des Siebes 15 befindet sich das aufzubrühende Material 16.

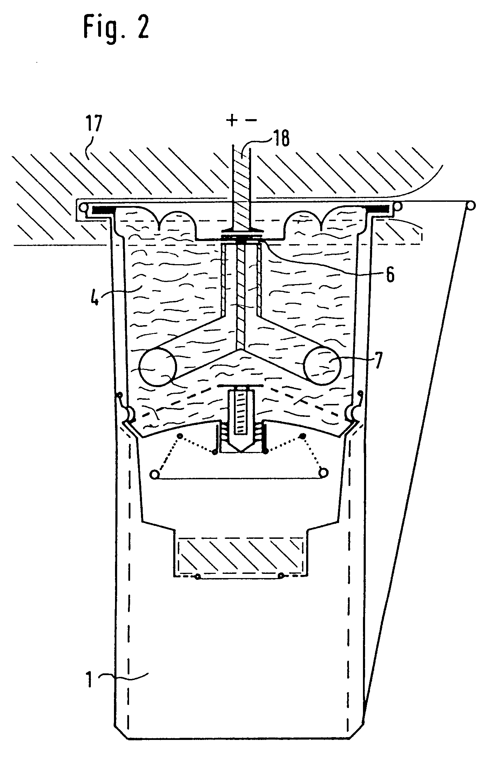

In Fig. 1 ist der Vorratsbehälter 4 im befüllten Zustand gezeigt. In der Stellung der Fig. 2 ist der Behälter in eine Halterung 17 mit einer Stromversorgung eingeschoben, die einen beweglichen Kontakt 18 aufweist, der beim Einschieben des Behälters gegen den Kontakt 6 gedrückt wird, wie dies aus der EP-A-0 382 001 bekannt ist. Die Flüssigkeit im Vorratsbehälter 4 wird dann durch die Heizelemente 7 erwärmt, wodurch allmählich der Innendruck im Vorratsbehälter 4 ansteigt. Ist eine ausreichende Temperatur und damit ein ausreichender Innendruck im Vorratsbehälter 4 erreicht, so wölbt sich der Boden 8, wie dies in Fig. 3 gezeigt ist, nach außen in seine andere stabile Stellung. Der rohrförmige Vorsprung 9 löst sich dabei vom Dorn 10, so daß nunmehr die Flüssigkeit in den Sammelbehälter 1 dringen kann und dabei das Material 16 aufbrüht. Da der Innendruck im Vorratsbehälter 4 abgesunken ist, bewegt sich der balgförmige Deckel 5 des Vorratsbehälters 4 entsprechend seiner Vorspannung nach unten, so daß die elektrische Verbindung zwischen den Kontakten 18 und 6 unterbrochen wird, so daß die Heizelemente 7 nicht mehr mit Strom versorgt werden. Es schadet also nicht, wenn der Behälter noch für einige Zeit in der Halterung 17 belassen wird.

Um das Getränk zu genießen wird dann der Behälter aus der Halterung 17 herausgenommen.

In der in den Fig. 1 bis 3 gezeigten Ausführungsform besteht der Behälter im wesentlichen aus drei Teilen, nämlich dem Sammelbehälter 1, dem Vorratsbehälter 4 und dem becherförmigen Teil 14. Zum Wiederbefüllen werden diese drei Teile voneinander getrennt und gereinigt. Der Vorratsbehälters 4 wird dann auf den Kopf gestellt, wie dies in Fig. 4 gezeigt ist, und es wird der Trichter 13 nach oben gefaltet, so daß Wasser aus einem Wasserhahn 19 in den Vorratsbehälter 4 gefüllt werden kann. Ist der Vorratsbehälter 4 voll, so wird Druck auf den Trichter 13 ausgeübt, wie dies in Fig. 5 gezeigt ist. Dadurch wird einerseits der Trichter 13 zusammengefaltet, so daß er weniger Raum beansprucht. Andererseits wird der Boden 8 nach unten gedrückt, so daß der aus ringförmigem Vorsprung 9 und Dorn 10 bestehende Verschluß wieder geschlossen wird. Der Boden 8 erreicht seine zweite, nach innen gewölbte, stabile Stellung.

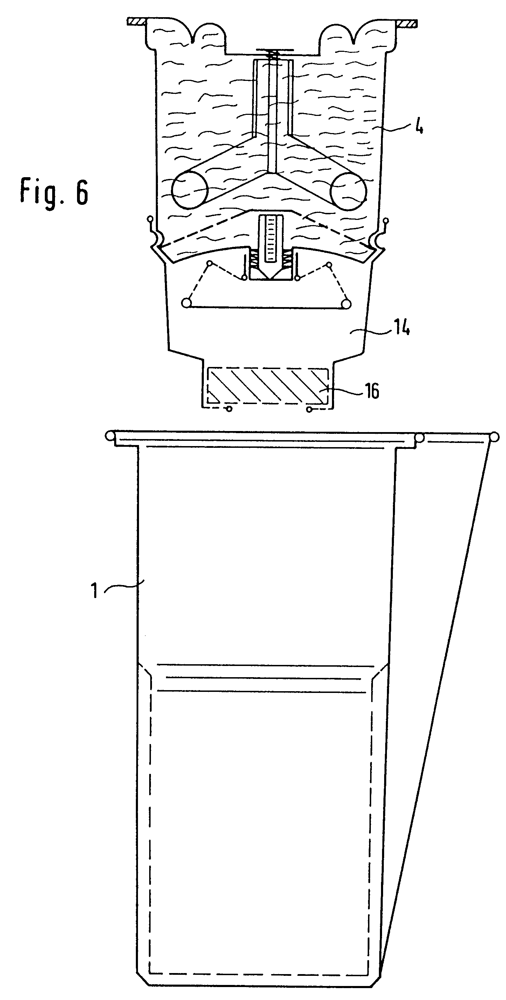

Anschließend wird dann das becherförmige Element 14 wieder aufgesetzt, in das das tablettenförmige aufzubrühende Material 16 eingesetzt wurde. Die so zusammengesetzte Anordnung wird dann in den Sammelbehälter 1 eingesetzt, wie dies in Fig. 6 gezeigt ist. Danach hat man dann wieder die Stellung der Fig. 1.

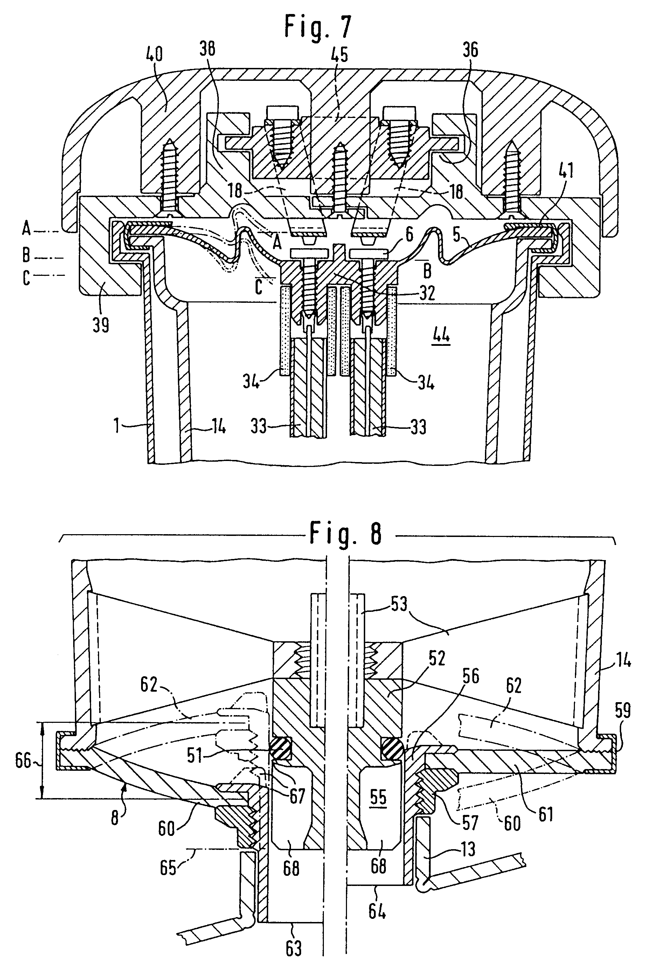

Die Ausführungsformen der Fig. 7 und 8 haben eine ähnliche Wirkungsweise.

In Fig. 7 ist der obere Teil des Behälters einer anderen Ausführungsform gezeigt, der in eine Halterung eingeschoben ist. Die Halterung weist eine Halterbasis 38 mit einem Wippenträger auf, der ein Wippenlager 36 aufweist, in der eine Schalterwippe 45 angeordnet ist. Die Halterung ist mit einer Halterabdeckung 40 abgedeckt. Die Kontakte, über die der Behälter mit Strom versorgt wird, sind als Federbleche 18 ausgebildet, die mit den Kontaktflächen 6 des Behälters Kontakt herstellen. Der Behälter ist in Flanschschienen 39 der Halterung eingeschoben, die den Behälter an einem Behälterspannring 41 festhalten. Der membranartige Deckel 5 kann dabei die drei mit A, B und C bezeichneten Stellungen einnehmen. A bezeichnet dabei die Deckelebene nach dem Aufheizen der Wasserfüllmenge, B bezeichnet die Deckelebene in der vorgespannten Mittelstellung, und C bezeichnet die Deckelebene in der entspannten Fertigungsform. Die Deckelbasis 32 bezeichnet dabei das Hubzentrum. Mit 33 sind Heizwendelanschlüsse bezeichnet, die in Schlauchbuchsen 34 angeordnet sind. Die Wandung des Außenbechers ist mit 1, die Wandung des inneren Bechers mit 14 und der Füllraum für Wasser mit 44 bezeichnet.

Das Ventil der Fig. 8 weist ein Kolbenventil 52 mit einem Gewindezapfen und vier Viertelkreisein- und -auslaufpassagen 55 auf. Der untere Teil des Kolbenventils hat also die Querschnittsform eines Kreuzes. Das Kolbenventil 52 weist einen Roll-Gleitring 51 auf, der gegen den Ventilzylinder 56 dichtend anliegen kann. Mit 53 ist eine kreuzförmige Haltetraverse mit Gewindeanschlußbasis für das Kolbenventil bezeichnet. Diese liegt an der Wandung des Innenbechers 14 an.

Der Ventilzylinder 56 weist aufgesetzte senkrechte Stabilisierungslamellen und ein Außengewinde auf, auf das eine Kontermutter 57 mit Flanschfläche aufgeschraubt ist. Zwischen Ventilzylinder 56 und Kontermutter 57 ist der flexible Membranboden 8 eingespannt, der in der Fig. in drei verschiedenen Stellungen dargestellt ist, die mit 60, 61 und 62 bezeichnet sind. In der linken Darstellung nimmt dabei der Membranboden 60 die unterste Stellung ein, in der Flüssigkeit durch das Ventil hindurchströmen kann. Im rechten Teil der Fig. 12 hat der Membranboden die mit 61 bezeichnete Stellung, in der gerade noch Abdichtung stattfindet, während bei der Darstellung 62 vollständige Abdichtung stattfinden würde. Dies ist der Zustand, wie er beim befüllten Behälter mit noch nicht erhitztem Behälterinhalt vorliegt.

Mit 13 ist der flexible kappbare Trichter bezeichnet, während 59 einen Bodenspannring bezeichnet, mit dem der Boden 8 bzw. 60, 61, 62 eingespannt ist. Mit 63, 64 und 65 sind die drei Ventilzylinderstellungen dargestellt, wobei sich der Arbeitshub aus dem Abstand der Stellungen 63 und 65 ergibt. 66 ist der Bodenhub. Mit 67 sind noch ein umlaufender Durchflußsektor, mit 68 sind untere Öffnungen der Ein- und Auslaufpassagen bezeichnet.

Die Behälterteile 1, 4 und 14 können aus Kunststoff, Metall oder Glas bestehen. Die Behälteraußenfläche kann gewellt oder gezackt sein, um so die Berührungsfläche mit der menschlichen Hand und damit den Wärmeübergang zu verringern. Der Ventildornen kann fest, aber auch federnd angebracht sein. Auch die übrigen Flächen können glattförmig oder gewellt oder gezackt sein. Die verschiedenen Böden können dabei ringförmig oder radial gewellt bzw. gezackt sein. Falls eine Suppe bereitet werden soll, kann natürlich auf das becherförmige Element 14 verzichtet werden. Das aufzubrühende Material 16 wird dann direkt im Sammelbehälter angeordnet. Die verschiedenen Teile können wie gesagt durch Schraubverschlüsse miteinander dichtend verbunden sein, wie man sie von Konservengläsern kennt. Dadurch wird die eigene Wiederbefüllung bzw. das Wiederbefüllen in Lebensmittelbetrieben erleichtert, so daß die Behälter immer wiederverwendet werden können.

## Patentansprüche

1. In ein Stromversorgungsteil einsetzbarer Behälter zum Zubereiten heißer Getränke mit einem Flüssigkeitsvorratsbehälter, einem darin angeordneten elektrischen Heizelement und einem Sammelbehälter für das zubereitete Getränk, wobei der Flüssigkeitsvorratsbehälter einen Verschluß aufweist, der im Boden des Flüssigkeitsvorratsbehälters angeordnet ist und sich bei einem vorgegebenen Behälterinnendruck aufgrund Auswölbens des Bodens nach außen nicht selbsttätig umkehrbar öffnet, der mit Kontakten für die Zuleitung von elektrischem Strom versehen ist, die über eine elektrische Leitung mit dem Heizelement verbunden sind, und der in den Sammelbehälter so einsetzbar oder eingesetzt ist, daß sich in der Betriebsstellung der Sammelraum im wesentlichen unterhalb des Vorratsbehälters befindet, und wobei die Stromzufuhr zum Heizelement so ausgebildet ist, daß sie beim Öffnen des Verschlusses unterbrochen wird, dadurch gekennzeichnet, daß der Verschluß (9,10) von einem eine Öffnung des Bodens (8) umgebenden rohrförmigen Vorsprung (9) und einem im Inneren des Flüssigkeitsvorratsbehälters (4) befestigten Dorn (10) gebildet ist, und daß am Vorsprung (9) und/oder Dorn (10), zwischen denselben, Dichtungen (12) angeordnet sind.

2. Behälter nach Anspruch 1, dadurch gekennzeichnet, daß die Dichtungen (12) Lippendichtungen sind.

3. Behälter nach Anspruch 1, dadurch gekennzeichnet, daß die Dichtungen (12) Rollringdichtungen sind.

4. Behälter nach einem der Ansprüche 1 bis 3, dadurch gekennzeichnet, daß unten auf den Flüssigkeitsvorratsbehälter (4) ein becherförmiges Element (14) mit dem aufzubrühenden Material (16) aufgesetzt ist.

5. Behälter nach einem der Ansprüche 1 bis 4, dadurch gekennzeichnet, daß der Flüssigkeitsvorratsbehälter (4) lösbar in den Sammelbehälter (1) eingsetzt ist.

6. Behälter nach Anspruch 5, dadurch gekennzeichnet, daß unten am ringförmigen Vorsprung (9) ein Trichter (13) angeordnet ist.

7. Behälter nach Anspruch 6, dadurch gekennzeichnet, daß der Trichter (13) zusammenfaltbar ist.

## Claims

1. Container which can be inserted into a power-supply unit and is intended for the preparation of hot drinks, with a liquid-storage container, an electric heating element arranged therein and a collecting container for the drink prepared, the liquid-storage container having a closure which is arranged in the bottom of the liquid-storage container and opens in a manner not automatically reversible at a predetermined internal pressure of the container, due to the arching outwards of the bottom, which is provided with contacts for the supply of electrical power which are connected to the heating element via an electric lead, and which can be inserted or is inserted into the collecting container in such a way that, in the operating position, the collecting space is essentially below the storage container, and the power supply to the heating element being designed in such a way that it is interrupted when the closure is opened, characterised in that the closure (9, 10) is formed by a turbular projection (9) surrounding an opening of the bottom (8) and by a spike (10) secured in the interior of the liquid-storage container (4), and in that seals (12) are arranged on the projection (9) and/or spike (10), between the latter.

2. Container according to Claim 1, characterised in that the seals (12) are lip seals.

3. Container according to Claim 1, characterised in that the seals (12) are rolling ring seals.

4. Container according to one of Claims 1 to 3, characterised in that a cup-shaped element (14) with the material (16) to be brewed is mounted at the bottom of the liquid-storage container (4).

5. Container according to one of Claims 1 to 4, characterized in that the liquid-storage container (4) is inserted releasably into the collecting container (1).

6. Container according to Claim 5, characterized in that a funnel (13) is arranged at the bottom of the annular projection (9).

7. Container according to Claim 6, characterised in that the funnel (13) can be folded up.

## Revendications

1. Récipient pouvant être disposé dans un élément d'alimentation électrique en vue de la préparation de boisson chaude, comportant un récipient réservoir de liquide, un élément de chauffage électrique disposé dans ce dernier et un récipient collecteur destiné à la boisson préparée, le récipient réservoir de liquide comportant un élément de fermeture qui est disposé dans le fond du récipient réservoir de liquide et qui s'ouvre sans possibilité de mouvement de retour automatique, pour une pression interne prédéterminée du récipient du fait d'un cintrage du fond vers l'extérieur, ledit fond étant muni de contacts destinés à amener du courant électrique et qui sont reliés à l'élément de chauffage par une ligne électrique, ledit élément de fermeture pouvant être disposé ou étant disposé dans le récipient collecteur de telle manière qu'il se trouve, en position de fonctionnement de la chambre collectrice essentiellement en dessous du récipient réservoir, l'amenée du courant à l'élément de chauffage étant réalisée de telle manière qu'elle est interrompue lors de l'ouverture de l'élément de fermeture, caractérisé en ce que l'élément de fermeture (9, 10) est constitué d'une partie saillante tubulaire (9) entourant une ouverture du fond (8) et d'un mandrin (10) fixé à l'intérieur du récipient (4) réservoir de liquide et en ce que sur la partie saillante (9) et/ou sur le mandrin (10), entre ces derniers, sont disposés des dispositifs d'étanchéité (12).

2. Récipient suivant la revendication 1 caractérisé en ce que les éléments d'étanchéité 12 sont des éléments d'étanchéité à lèvres.

3. Récipient suivant la revendication 1, caractérisé en ce que les éléments d'étanchéité (12) sont des anneaux d'étanchéité en rouleau.

4. Récipient selon l'une quelconque des revendications 1 à 3, caractérisé en ce que, au-dessous du récipient réservoir de liquide (4), se trouve un élément (14) en forme d'auge contenant la matière (16) à infuser.

5. Récipient selon l'une quelconque des revendications 1 à 4, caractérisé en ce que le récipient (4) réservoir de liquide est fixé de manière amovible dans le récipient collecteur (1).

6. Récipient selon la revendication 5, caractérisé en ce que, en dessous, sur la partie saillante (9) en forme d'anneau, est disposée une trémie (13).

7. Réservoir selon la revendication 6, caractérisé en ce que la trémie peut être repliée.
